# EUROPÄISCHE PATENTSCHRIFT

(11) **EP 2 877 055 B1**
(45) Veröffentlichungstag und Bekanntmachung des Hinweises auf die Patenterteilung: **12.10.2016**
(21) Anmeldenummer: 13739388.0
(22) Anmeldetag: 12.07.2013
(51) Int. Cl.: A47B 88/10

(54) **AUSZUGSFÜHRUNG FÜR RELATIV ZUEINANDER BEWEGBARE MÖBELTEILE**
PULL-OUT GUIDE FOR FURNITURE PARTS WHICH CAN MOVE RELATIVE TO ONE ANOTHER
GUIDAGE TÉLESCOPIQUE DESTINÉ À DES PARTIES DE MEUBLE MOBILES LES UNES PAR RAPPORT AUX AUTRES

(30) Priorität: 25.07.2012 DE 102012106751
(43) Veröffentlichungstag der Anmeldung: 03.06.2015
(73) Patentinhaber: Paul Hettich GmbH & Co. KG, 32278 Kirchlengern (DE)
(72) Erfinder: JÄHRLING, Peter, 32257 Bünde (DE); HEMMINGER, Alexander, 33790 Halle (DE); BASTKOWSKI, Sebastian, 32052 Herford (DE)
(74) Vertreter: Kleine, Hubertus
(86) Internationale Anmeldenummer: PCT/EP2013/064797
(87) Internationale Veröffentlichungsnummer: WO 2014/016141

(56) Entgegenhaltungen:
- DE-A1-102010 042 180
- DE-U1-202008 004 658
- US-A- 5 417 496

## Beschreibung

Die Erfindung betrifft eine Auszugführung für relativ zueinander bewegbare Möbelteile, die mindestens zwei Auszugsschienen und einen Wälzkörperkäfig mit einer Mehrzahl von Wälzkörpern aufweist, wobei mindestens einer der Wälzkörper einen größeren Durchmesser und ein kleineres Elastizitätsmodul aufweist als die restlichen Wälzkörper des mindestens einen Wälzkörperkäfigs.

Auszugsführungen für relativ zueinander bewegbare Möbelteile, wie z.B. für Schubkästen, die in einem Möbelkorpus bewegbar gelagert sind, sind aus dem Stand der Technik seit langem bekannt, beispielsweise aus der Druckschrift DE 3536654 C2. Als Wälzkörper werden in dem Wälzkörperkäfig drehbar gelagerte zylindrische Rollen oder Kugeln eingesetzt. Häufig werden dabei "harte" Stahlkugeln oder - rollen mit einem großen Elastizitätsmodul (E-Modul) verwendet, da sie auch bei hoher mechanischer Belastung durch ein großes Gewicht, das von der Auszugsführung bewegbar gelagert wird, eine leichtgängige Führung ermöglichen. Nachteile können dabei laute Rollgeräusche sein, die umso ausgeprägter sind, je weniger die Auszugsführung belastet ist. Bei Schubkästen als bewegbarem Möbelteil liegt eine geringe Belastung insbesondere bei einem leeren oder fast leeren Schubkasten vor. Die Rollgeräusche werden dann durch den mitschwingenden Schubkastenboden und das durch den leeren Schubkasten große zur Verfügung stehende Resonanzvolumen noch verstärkt.

Aus der Druckschrift WO2012/045854 A1 ist zur Erzielung eines geringen Abrollgeräusches bei vorzugsweise geringem Rollwiderstand bekannt, bei einer Auszugsführung in einem Wälzkörperkäfig zwei unterschiedliche Arten von Wälzkörpern einzusetzen, wobei eine erste Art von Wälzkörpern aus einem Material mit einer geringeren Härte gefertigt ist als die oder der Wälzkörper der zweiten Art und wobei der Wälzkörper der ersten Art größer ist als der Wälzkörper der zweiten Art. Im Hinblick auf das Größenverhältnis der beiden Wälzkörper ist ausgeführt, das der Durchmesser der Wälzkörper der zweiten Art mindestens ein Promille kleiner ist als der Durchmesser der Wälzkörper der ersten Art. Eine Obergrenze für den Durchmesser der weniger harten Wälzkörper der zweiten Art ist in der Druckschrift nicht angegeben.

Versuche haben gezeigt, dass bei einem Größenunterschied von nur einem Promille zwischen dem Wälzkörpern der beiden unterschiedlichen Arten abhängig von den verwendeten Materialien nicht gesichert ist, dass sich das Abrollgeräusch der Auszugsführung verringert. Wird umgekehrt ein zu großer Größenunterschied gewählt, kann dieses in einer Zerstörung der größeren, weicheren Wälzkörper resultieren.

Es ist daher eine Aufgabe der vorliegenden Erfindung, eine Auszugsführung der eingangs genannten Art zu schaffen, bei der der Größenunterschied der verschiedenen Wälzkörper so spezifiziert ist, dass zum einen eine Geräuschreduzierung der Abrollgeräusche zuverlässig erreicht wird und zum anderen die Auszugsführung langlebig ist und sich insbesondere keine Beschädigung der größeren, weicheren Wälzkörper zeigen.

Die Aufgabe wird gelöst durch eine Auszugsführung mit den Merkmalen des unabhängigen Anspruchs. Vorteilhafte Ausgestaltungen und Weiterbildungen der Erfindung sind in den abhängigen Ansprüchen angegeben.

Eine erfindungsgemäße Auszugsführung der eingangs genannten Art zeichnet sich dadurch aus, dass ein Durchmesserunterschied zwischen einem ersten nominellen Durchmesser des ersten Wälzkörpers und einem zweiten nominellen Durchmesser des zweiten Wälzkörpers größer ist als eine untere Grenze, die mindestens so groß ist wie eine Fertigungstoleranz im Durchmesser des ersten Wälzkörpers.

Auf diese Weise wird verhindert, dass aufgrund von Fertigungstoleranzen, die insbesondere bei den weicheren, ersten Wälzkörpern materialbedingt relativ ausgeprägt sind, bei unbelasteter Auszugsführung bereits die zweiten, härteren Wälzkörper Last übernehmen, was die Lautstärke beim Betätigen der Auszugsführung erhöhen würde. Durch Berücksichtigung zumindest der Fertigungstoleranz im Durchmesser des ersten Wälzkörpers wird sichergestellt, dass gerade bei unbelasteter Auszugsführung, z.B. bei einem leeren Schubkasten, eine Führung der Auszugsschienen über die ersten, weicheren Wälzkörper und entsprechend leise geschieht.

Darüber hinaus ist bei einer erfindungsgemäßen Auszugsführung die untere Grenze mindestens so groß wie die Fertigungstoleranz im Durchmesser des ersten Wälzkörpers zuzüglich einer Fertigungstoleranz im Durchmesser des zweiten Wälzkörpers und zuzüglich eines Mindestbetrags von mindestens 0,01 mm. Auf diese Weise kann zum einen die Fertigungstoleranz der zweiten, härteren Wälzkörper ebenfalls berücksichtigt werden, falls diese nicht vernachlässigbar klein gegenüber der Fertigungstoleranz der ersten, weicheren Wälzkörper ist. Zum anderen wird die durch den Mindestbetrag sichergestellt, dass die erfindungsgemäße Geräuschreduzierung auch bei geringfügig belasteter Auszugsschiene gegeben ist. Bevorzugt ist dabei der Mindestbetrag abhängig vom Unterschied des E-Moduls zwischen dem ersten und dem zweiten Wälzkörper.

Weiter zeichnet sich die erfindungsgemäße Auszugsführung dadurch aus, dasseine obere Grenze für den Durchmesserunterschied vorgesehen ist. Dabei ist die obere Grenze abhängig von einer Belastung der Auszugsführung, bei der der zumindest eine zweite Wälzkörper eine Druckbelastung erfährt. Auf diese Weise kann die Belastung der Auszugsführung eingestellt werden, bei der ein Lastwechsel zwischen den ersten, weicheren und zweiten, härteren Wälzkörpern stattfindet. Weiter ist die obere Grenze maximal so groß wie die Summe aus der Fertigungstoleranz im Durchmesser der ersten Wälzkörper und einem Maximalbetrag, wobei dieser Maximalbetrag höchstens 0,3 mm beträgt. Diese Kriterien sind leicht umsetzbar und gewährleisten für typische Materialkombinationen für die ersten und zweiten Wälzkörper, dass die Fließgrenze des ersten Wälzkörpers nicht erreicht wird und so eine Zerstörung ersten, weicheren Wälzkörper verhindert ist.

Bevorzugt ist der Durchmesserunterschied an der oberen Grenze kleiner, als dass bei Komprimierung des mindestens einen ersten Wälzkörpers auf den nominellen Durchmesser des zweiten Wälzkörpers eine Fließgrenze des ersten Wälzkörpers erreicht wird. Es wird so erreicht, dass auch bei hoher Belastung der Auszugsführung, also z.B. bei einem voll beladenen Schubkasten, eine Überlastung und daraufhin erfolgende Zerstörung der ersten, weicheren Wälzkörper vermieden wird.

In einer weiteren vorteilhaften Ausgestaltung der Auszugsführung laufen die Wälzkörper zwischen den mindestens zwei Auszugsschienen auf mindestens zwei Wälzkörperlaufbahnen, wobei wenigstens zwei der auf einer der Wälzkörperlaufbahnen hintereinanderliegenden Wälzkörper zweite Wälzkörper sind. Bevorzugt ist der wenigstens ein erster Wälzkörper auf der gleichen Wälzkörperlaufbahn der Auszugsführung angeordnet wie die wenigstens zwei zweiten Wälzkörper. Besonders bevorzugt sind die wenigstens zwei zweiten Wälzkörper jeweils endseitig der Wälzkörperlaufbahn angeordnet. Diese Ausgestaltungen stellen besonders günstige Anordnungen der ersten bzw. zweiten Wälzkörper innerhalb des oder der Wälzkörperkäfige dar, in denen die erfindungsgemäßen Vorteile besonders gut zur Geltung kommen. Eine Wälzkörperlaufbahn ist dabei durch die Trajektorie eines Wälzkörpers bei dem Betätigen der Auszugsführung definiert. In Auszugsrichtung hintereinander liegende Wälzkörper laufen somit auf der gleichen Wälzkörperlaufbahn.

In einer weiteren vorteilhaften Ausgestaltung der Auszugsführung sind neben den ersten und zweiten Wälzkörpern weitere, sich von den ersten und zweiten Wälzkörpern unterscheidende Wälzkörper vorhanden. Eine erfindungsgemäße Auszugsführung ist somit nicht auf das Vorhandensein der ersten und zweiten Wälzkörper beschränkt, sondern kann auch in Auszugsführungen umgesetzt werden, die eine oder mehrere Arten weiterer Wälzkörper aufweist. Diese können beispielsweise bei besonders hohen Belastungen der Auszugsführung oder bei bestimmten Kippbelastungen, insbesondere bei teilweise oder vollständig ausgezogenen Auszugsführungen, Last aufnehmen und die Laufeigenschaften weiter verbessern.

In einer weiteren vorteilhaften Ausgestaltung der Auszugsführung besteht der mindestens eine zweite Wälzkörper aus Stahl und/oder der mindestens eine erste Wälzkörper aus Polyoxymethylen (POM) oder Polypropylen (PP). Diese Materialkombinationen eigenen sich besonders gut zur Umsetzung der Erfindung, insbesondere da die genannten Materialien E-Modulen einer gut geeigneten Größe aufweisen.

Die Erfindung wird nachfolgend anhand von Ausführungsbeispielen mithilfe von Figuren näher gezeigt. Es zeigen:
- Fig. 1: eine perspektivische Ansicht eines ersten Ausführungsbeispiels einer Auszugsführung;
- Fig. 2: eine Schnittansicht der Auszugsführung der Fig. 1;
- Fig. 3: eine perspektivische Detaildarstellung eines Wälzkörperkäfigs im ersten Ausführungsbeispiel der Auszugsführung;
- Fig. 4: eine schematische Darstellung der Größenverhältnisse der unterschiedlichen Wälzkörper;
- Fig. 5a: ein schematisches Diagramm zur Darstellung der Belastung der unterschiedlichen Wälzkörper in Abhängigkeit der Belastung einer anmeldungsgemäßen Auszugsführung;
- Fig. 5b: ein schematisches Diagramm zur Darstellung des Schalldruckpegels in Abhängigkeit von einer Belastung der Auszugsführung;
- Fig. 6a bis 6c: jeweils eine Draufsicht auf einen Wälzkörperkäfig mit unterschiedlichen Anordnungen der verschiedenen Wälzkörper;
- Fig. 7a: eine perspektivische Darstellung eines Wälzkörperkäfigs mit Wälzkörpern in einem zweiten Ausführungsbeispiel;
- Fig. 7b: eine Schnittansicht des Wälzkörperkäfigs des zweiten Ausführungsbeispiels und
- Fig. 7c: eine Seitenansicht des Wälzkörperkäfigs des zweiten Ausführungsbeispiels.

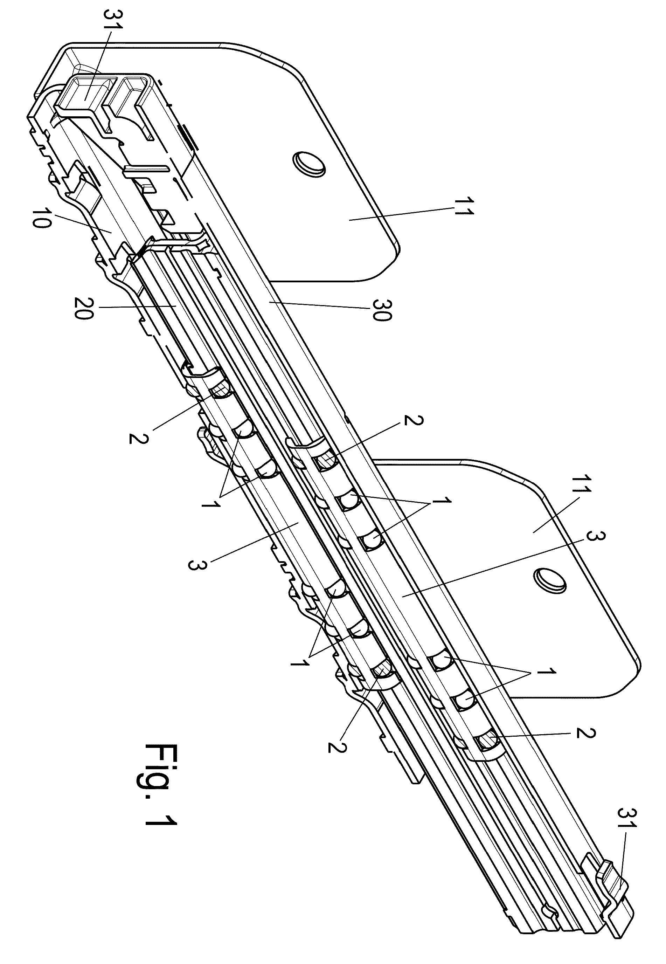

Die Fig. 1 zeigt ein erstes Ausführungsbeispiel einer Auszugsführung in einer perspektivischen Darstellung. Die Auszugsführung weist mindestens zwei, vorliegend drei, relativ zueinander vorzugsweise linear verschiebbare Auszugsschienen auf, eine äußere Auszugsschiene 10, eine mittlere Auszugsschiene 20 und eine innere Auszugsschiene 30. Die äußere Auszugsschiene 10 ist mit Befestigungsmitteln 11 verbunden, die der Festlegung der äußeren Auszugsschiene 10 beispielsweise an einem Möbelkorpus dienen. Die innere Auszugsschiene 30 weist Befestigungsmittel 31 auf, mit denen sie an einem bewegbaren Möbelteil, beispielsweise einem Schubkasten, festgelegt werden kann. In der Fig. 1 sind die äußere Auszugsschiene 10 und die innere Auszugsschiene 30 aufgeschnitten dargestellt, um Einblick in den inneren Aufbau der Auszugsführung zu geben.

Die in Fig. 1 dargestellte Auszugsführung ist lediglich als ein bevorzugtes Ausführungsbeispiel zu verstehen. Die Erfindung lässt sich ebenso in anders ausgestalteten Auszugsführungen umsetzen. Sie ist weder auf die in Fig. 1 gezeigte Anzahl von drei relativ zueinander bewegten Schienen festgelegt, noch auf die geometrische Ausgestaltung der Schienen.

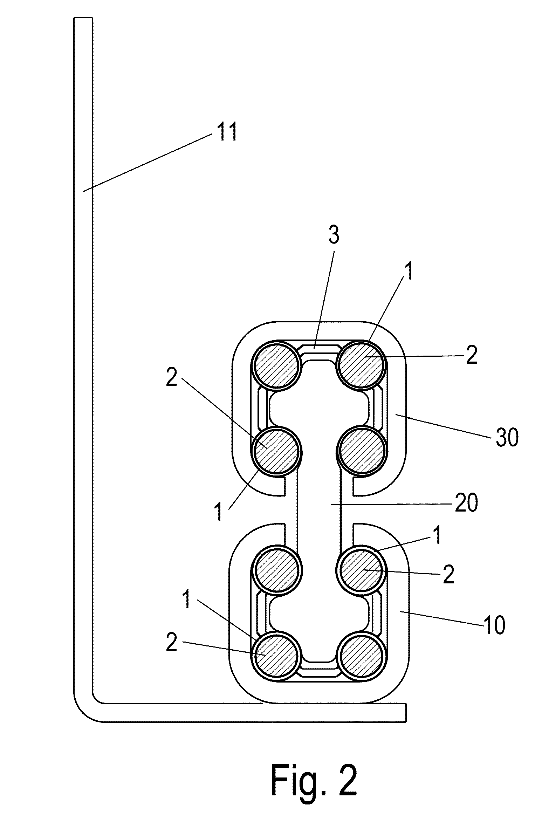

Fig. 2 zeigt die Auszugsführung der Fig. 1 im Querschnitt. Die äußere Auszugsschiene 10 und die innere Auszugsschiene 30 weisen jeweils ein quadratisches Profil mit abgerundeten Ecken auf, wobei die gegenüberliegenden Seiten mit einem Längsschlitz versehen sind, so dass sich insgesamt ein c-förmiges Profil ergibt. Zumindest im mittleren Bereich sind die äußere Auszugsschiene 10 und die innere Auszugsschiene 30 bevorzugt aus Stahlblech gefertigt, wobei in den Endbereichen Kunststoffstopfen eingesteckt sein können. Wie Fig. 1 zeigt, werden beispielsweise die Befestigungsmittel 31 von derartigen Kunststoffstopfen gebildet.

Es ist weiterhin eine mittlere Auszugsschiene 20 vorgesehen, die ein Profil aufweist, das einem Doppelkreuz ähnlich ist. Die mittlere Auszugsschiene 20 ist mit je einem ihrer kreuzförmigen Abschnitte über eine Wälzlagereinrichtung in der äußeren Auszugsschiene 10 bzw. der inneren Auszugsschiene 30 geführt.

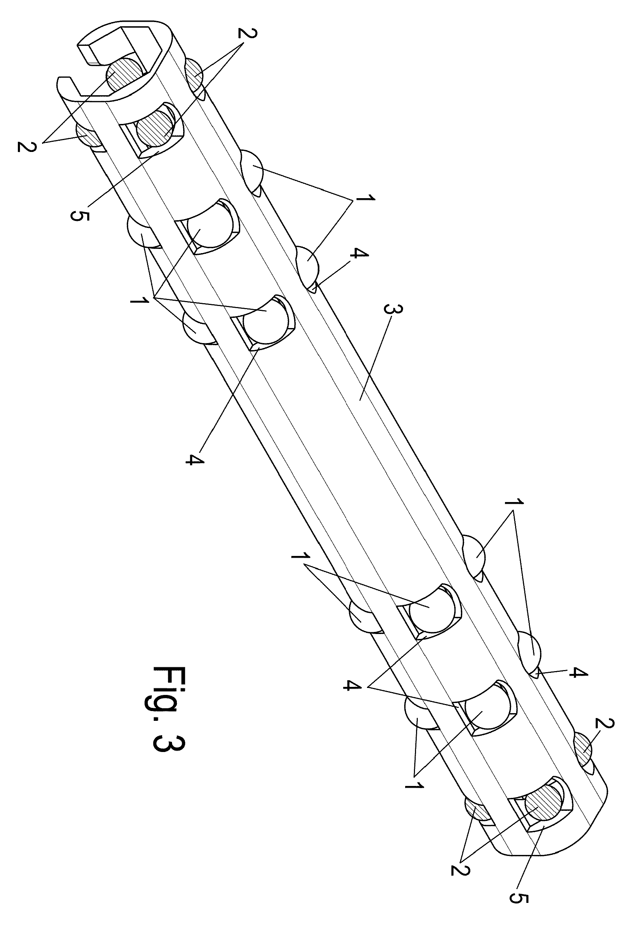

Die beim ersten Ausführungsbeispiel verwendete Wälzlagereinrichtung ist in Fig. 3 detaillierter in einer perspektivischen Zeichnung wiedergebeben. Sie weist einen länglichen und im Profil c-förmigen Wälzkörperkäfig 3 auf, in dem eine Mehrzahl von Wälzkörpern 1, 2 in den Wälzkörperlagerstellen 4, 5 angeordnet sind. Vorliegend werden Kugeln als Wälzkörper 1, 2 eingesetzt. Es versteht sich, dass in erfindungsgemäßen Auszugsführungen auch andersartige Wälzkörper verwendet werden können, beispielsweise Rollen oder tonnen- oder ellipsenförmige Körper. Derartige Wälzkörper können mit oder ohne Lagerzapfen ebenfalls in entsprechend ausgestalteten Wälzkörperkäfigen drehbar gelagert gehalten werden.

In Längsrichtung des Wälzkörperkäfigs 3 sind Wälzkörper 1, 2 in sechs Ebenen angeordnet, die in zwei Gruppen mit je drei Ebenen jeweils im äußeren Bereich des Wälzkörperkäfigs 3 gruppiert sind. In jeder der Ebenen sind jeweils vier Wälzkörper 1, 2 vorgesehen, die - wie Fig. 2 zeigt - im zusammengebauten Zustand der Auszugsführung jeweils in einer der abgerundeten Ecken der äußeren Auszugsschienen 10 bzw. der inneren Auszugsschiene 30 positioniert sind. Bei dem dargestellten Wälzkörperkäfig 3 laufen die Wälzkörper 1, 2 somit auf drei unterschiedlichen Wälzkörperlaufbahnen. Eine Wälzkörperlaufbahn ist dabei durch die Trajektorie eines Wälzkörpers bei dem Betätigen der Auszugsführung definiert. In Auszugsrichtung der Auszugsführung bzw. in Längsrichtung des Wälzkörperkäfigs 3 hintereinander liegende Wälzkörper laufen auf der gleichen Wälzkörperlaufbahn.

Der Wälzkörperkäfig 3 kann beispielsweise aus Kunststoff oder Metall, insbesondere gesintertem Metall, bestehen. Auch ein Wälzkörperkäfig aus einem Mehrkomponentenwerkstoff ist möglich, wobei ein Grundkörper aus einem formsteifen Material vorgesehen sein kann und die Lagerbereiche aus einem plastisch verformbaren Material, beispielsweise Kunststoff, bestehen können. Vorteilhaft ist es, wenn wenigstens der Werkstoff der Lagerstellen dabei tribologisch optimierte Eigenschaften aufweist, so dass ein zur Drehung der Wälzkörper notwendiges Drehmoment möglichst reduziert wird. Dieses wird beispielsweise auch durch Schmierstoffe erreicht, die sich bereits in dem Werkstoff der Lagerstellen befinden.

Innerhalb eines jeden der beiden Wälzkörperkäfige 3 sind unterschiedliche Arten von Wälzkörpern vorgesehen, erste Wälzkörper 1, die in den Fig. jeweils ohne Schraffur dargestellt sind, und zweite Wälzkörper 2, die jeweils schraffiert gezeichnet sind. Die ersten Wälzkörper 1 und die zweiten Wälzkörper 2 unterscheiden sich sowohl in ihrem Durchmesser, als auch in ihrer Härte, die beispielsweise anhand ihres E-Moduls beschrieben wird. Die ersten Wälzkörper 1 weisen ein geringeres E-Modul auf, sind also weicher als die zweiten Wälzkörper 2 und haben im unbelasteten Zustand einen größeren Durchmesser als die zweiten Wälzkörper 2. Entsprechend dem Größenunterschied der ersten Wälzkörper 1 und der zweiten Wälzkörper 2 sind auch die Lagerstellen 4 und 5 für die unterschiedlichen Wälzkörperarten unterschiedlich groß bemessen. Die Lagerstellen 4, 5 sind hier so ausgebildet, dass die entsprechenden ersten bzw. zweiten Wälzkörper 1, 2 in die Lagerstellen 4, 5 eingedrückt werden können, wobei sich während des Eindrückens die Ränder der Lagerstellen 4, 5 aufweiten und/oder die Wälzkörper 1, 2 zusammengedrückt werden. Nach Einsetzen in die Lagerstellen 4, 5 sind die Wälzkörper 1, 2 im Wälzkörperkäfig 3 in den entsprechenden Lagerstellen 4, 5 möglichst frei drehbar gehalten.

Die Wälzkörper 1, 2 können aus Metallen wie Messing, Bronze, Aluminium oder Stahl oder aus Nichtmetallen wie Polyamid, Polyoxymethylen (POM), Polyethylen (PE), Polypropylen (PP), Duromeren oder Keramik bestehen. Eine mögliche Kombination von weicheren Wälzkörpern 1 und härteren Wälzkörpern 2 ist beispielsweise durch die Materialkombination von POM oder PP für die ersten Wälzkörper 1 und Stahl für die zweiten Wälzkörper 2 gegeben.

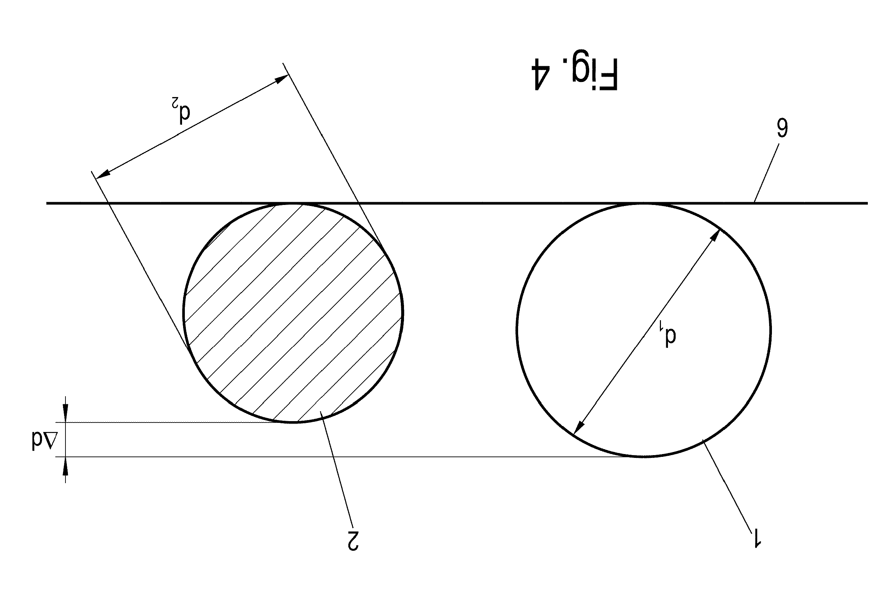

Fig. 4 dient der Definition der im Folgenden verwendeten Größen. Es sind ein erster Wälzkörper 1 und ein zweiter Wälzkörper 2 auf einer Ebene 6 nebeneinander dargestellt. Der erste Wälzkörper 1 hat einen ersten Durchmesser d₁, der zweite Wälzkörper 2 hat einen zweiten Durchmesser d₂. Der unterschiedlichen Durchmesser wird durch eine Durchmesserdifferenz Δd = d₁ - d₂ angegeben. Δd ist größer Null, da definitionsgemäß der erste Durchmesser d₁ größer ist als der zweite Durchmesser d₂ ist.

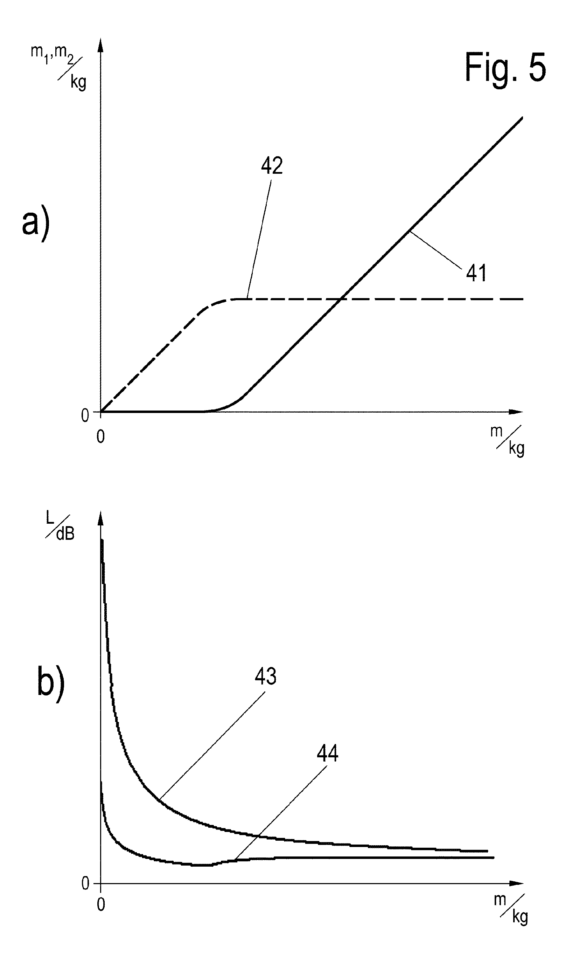

Anhand von Fig. 5 wird nachfolgend mithilfe von zwei schematischen Diagrammen die Funktionsweise der erfindungsgemäßen Auszugsführung näher erläutert.

Aufgrund des größeren Durchmessers der ersten Wälzkörper 1 laufen die Auszugsschienen 10, 20 bzw. 20, 30 bei geringer Belastung der Auszugsführung im Wesentlichen nur auf den ersten Wälzkörpern 1. Die kleineren zweiten Wälzkörper 2 haben entweder zu keiner der beiden Auszugsschienen 10, 20 bzw. 20, 30 Kontakt oder laufen auf einer der beiden Auszugsschienen, beispielsweise der jeweils unteren, ab. Mit steigender Belastung der Auszugsführung werden die größeren, aber weicheren ersten Wälzkörper 1 zunehmend zusammen gedrückt, bis ab einer bestimmten Belastung der Auszugsführung zumindest einer der ersten Wälzkörper 1 so sehr komprimiert ist, dass zumindest einer der zweiten Wälzkörper 2 in Kontakt mit beiden benachbarten Auszugsschienen 10, 20 bzw. 20, 30 gelangt. Eine darüberhinausgehende Belastung der Auszugsführung wird dann im Wesentlichen von den zweiten Wälzkörpern 2 übernommen, die aufgrund ihres größeren E-Moduls auch bei weiter steigender Belastung geringfügiger zusammengedrückt werden. Bei einem großen Unterschied in den E-Modulen zwischen den ersten und den zweiten Wälzkörpern 1, 2, wie es beispielsweise bei einer Materialkombination POM oder PP gegenüber Stahl gegeben ist, wirken die zweiten Wälzkörper 2 nahezu wie eine Begrenzung.

Fig. 5a verdeutlich in einem Diagramm die Belastungsverteilung auf die ersten bzw. zweiten Wälzkörper 1, 2. Auf der Abszisse ist eine Gesamtbelastung einer Auszugsführung angegeben, dargestellt als Masse m, mit der die gesamte Auszugsführung belastet ist. Auf der Ordinate sind Teilmassen m₁, m₂ der Gesamtmasse m aufgetragen, die von den ersten Wälzkörpern 1 (m₁) bzw. den zweiten Wälzkörpern 2 (m₂) aufgenommen werden. Eine Belastungskurve 41 gibt die Größe der Teilmasse m₁ an, die die ersten Wälzkörper 1 aufnehmen, und eine Belastungskurve 42 gibt die Teilmasse m₂ an, die von den zweiten Wälzkörpern 2 aufgenommen wird.

Wenn die Belastung der Auszugsführung in einem eingeschobenen Zustand der Auszugsführung und in Form einer senkrecht nach unten auf die waagerecht ausgerichteten Schienen wirkt, teilt sich die Belastung gleichmäßig zunächst auf alle vorhandenen ersten Wälzkörper 1 und danach auf alle vorhandenen ersten und zweiten Wälzkörper 1, 2 auf. In diesem Fall, der beispielsweise bei einem eingeschobenen und gleichmäßig belasteten Schubkasten vorliegt, kann ein Übergangspunkt, an dem die zweiten Wälzkörper 2 belastet werden, genau angegeben werden. Bei ungleichmäßiger Belastung des Schubkastens oder bei einem Teilauszug oder einem vollständigen Auszug der Auszugsführung ergibt sich zusätzlich zu der senkrecht auf die Schienen wirkende Kraft ein auf die Auszugsschienen 10, 20, 30 wirkendes Drehmoment. Dieses führt dazu, dass die ersten Wälzkörper 1 an unterschiedlichen Positionen innerhalb des Wälzkörperkäfigs 3 unterschiedlich stark belastet und damit komprimiert werden. Der Übergang der Belastung von den ersten Wälzkörpern 1 auf die zweiten Wälzkörper 2 abhängig von der Belastung der Auszugsführung ist dann weniger diskret ausgebildet, sondern über einen weiteren Belastungsbereich verteilt. Entsprechend ändern die Kurven 41, 42 insbesondere im Übergangsbereich, ihre Steigung stetig.

In Fig. 5b ist in einem Diagramm der sich ergebende vorteilhafte Effekt auf die Geräuschentwicklung bei Bewegung der Auszugsführung verdeutlicht. Auf der Abszisse ist wiederum eine Gesamtbelastung einer Auszugsführung angegeben, dargestellt als Masse m, mit der die gesamte Auszugsführung belastet ist. Auf der Ordinate ist der von der Auszugsführung abgegebene Schalldruckpegel L in Dezibel notiert.

Es sind zum Vergleich zwei Schalldruckpegelkurven 43, 44 eingezeichnet, von denen die Schalldruckpegelkurve 43 die Rollgeräusche einer Auszugsführung wiedergibt, die ausschließlich mit harten Wälzkörpern, beispielsweise Stahlkugeln oder -rollen, bestückt ist. Insbesondere bei geringer Belastung (kleine Masse m) zeigen sich hohe Rollgeräusche.

Demgegenüber sind die Rollgeräusche bei geringer Belastung bei einer anmeldungsgemäßen Auszugsführung mit weicheren ersten Wälzkörpern 1 und härteren zweiten Wälzkörpern 2 über den gesamten dargestellten Belastungsbereich verringert. Dieses ist in der Schalldruckpegelkurve 44 wiedergegeben. Insbesondere bei geringer Belastung, bei der ausschließlich oder im Wesentlichen die weicheren ersten Wälzkörper 1 belastet sind, ist die erzielte Geräuschreduzierung deutlich ausgeprägt. Bei hoher Belastung, bei der auch bei der anmeldungsgemäßen Auszugsführung im Wesentlichen die Belastung von den zweiten Wälzkörpern 2 aufgenommen wird, nähern sich die Schalldruckpegelkurven 43, 44 einander an.

Damit im unteren Belastungsbereich sichergestellt ist, dass die ersten Wälzkörper 1 im Eingriff mit den Auszugsschienen 10, 20 ihre geräuschmindernde Wirkung entfalten können, muss der Größenunterschied Δd zwischen den Durchmessern d₁ und d₂ der ersten bzw. zweiten Wälzkörper 1, 2 bestimmte Kriterien erfüllen. Die Wälzkörper 1, 2 weisen bezüglich ihres Durchmessers gewisse unvermeidliche Fertigungstoleranzen auf. Diese sind insbesondere bei den ersten Wälzkörpern 1, die aus dem weicheren Material gefertigt sind, typischerweise größer als die Fertigungstoleranzen der härteren zweiten Wälzkörper 2. Unter der Annahme von zu größeren und zu kleineren Durchmessern hin gleich großen (symmetrischen) Fertigungstoleranzen Δd₁ und Δd₂ liegen die tatsächlichen Durchmesser der ersten Wälzkörper 1 innerhalb des Bereichs d₁ ± Δd₁ und die der zweiten Wälzkörper 2 innerhalb des Bereichs d₂ ± Δd₂. d₁ und d₂ bezeichnen dann entsprechend nominale Durchmesser.

Wenn alle innerhalb eines Wälzkörperkäfigs verwendeten ersten Wälzkörper 1 größer sind als alle verwendeten zweiten Wälzkörper 2 bewirken die ersten Wälzkörper 1 bei geringer Belastung die Geräuschminderung beim Bewegen der Auszugsschienen. Um dieses zu gewährleisten, muss der auf die nominellen Durchmesser d₁, d₂ bezogene Durchmesserunterschied Δ d größer gewählt werden als die Summe der Fertigungstoleranzen Δd₁ + Δd₂. Da die Fertigungstoleranzen bei den zweiten, härteren Wälzkörpern 2 üblicherweise deutlich kleiner sind als bei den ersten, weicheren Wälzkörpern 2, kann die Fertigungstoleranz Δd₂ gegenüber der Fertigungstoleranzen Δd₂ ggf. vernachlässigt werden, so dass sich dieses Kriterium dahingehend vereinfacht, dass der Durchmesserunterschied Δ d größer als die Fertigungstoleranz Δd₁ zu wählen ist.

Wenn ein nicht symmetrischer Fertigungstoleranzbereich angenommen wird, ist bei der Bestimmung des Unterschieds im Durchmesser Δd der nominellen Durchmesser d₁, d₂ der untere Toleranzbereich für die Toleranz im Durchmesser der ersten Wälzkörper 1 und der obere Toleranzbereich für die Toleranz im Durchmesser der zweiten Wälzkörper 2 zu berücksichtigen. Es gilt also, dass die Summe der Differenzen zwischen dem nominellen Durchmesser d₁ und dem kleinstmöglichen Durchmesser des weicheren, ersten Wälzkörpers 1 und dem größtmöglichen Durchmesser und dem nominellen Durchmesser d₂ des härteren, zweiten Wälzkörpers 2 eine untere Grenze für den Durchmesserunterschied Δ d festlegen.

Es ist vorteilhaft, wenn darüber hinaus bei der unteren Grenze als weiteres Kriterium für die geräuschmindernde Wirkung im unteren Belastungsbereich neben den Fertigungstoleranzen auch die unterschiedlichen E-Modulen zwischen den weicheren, ersten Wälzkörpern 1 und dem härteren, zweiten Wälzkörpern 2 berücksichtigt werden. Je größer die Differenz zwischen den E-Modulen ist, desto größer sollte ein Mindestbetrag sein, der noch zu der zuvor genannten Fertigungstoleranz Δd₁ bzw. zur Summe der Fertigungstoleranzen Δd₁ + Δd₂ hinzugerechnet wird. Der Mindestbetrag sollte vorteilhafterweise mindestens 0,01 mm (Millimeter) betragen.

Daneben ist auch eine obere Grenze für den Durchmesserunterschied Δ d zu beachten. Ein Kriterium für diese obere Grenze für Δd berücksichtigt die Materialbelastbarkeit der ersten, weicheren Wälzkörper 1. Diese könnten zerstört werden, falls sie mit steigender Belastung der Auszugsführung zu sehr komprimiert werden, bevor die zweiten Wälzkörper 2 die weitere Komprimierung der ersten Wälzkörper 1 begrenzen. Eine Zerstörung der ersten Wälzkörper 1 setzt ein, sobald der Bereich der elastischen Verformung der ersten Wälzkörper 1 verlassen wird. Der Bereich der elastischen Verformung der ersten Wälzkörper d₁ wird verlassen, sobald eine Fließgrenze des Materials der ersten Wälzkörper 1 überschritten ist. Die Fließgrenze betrifft dabei eine bei der statischen Komprimierung, also der Komprimierung ohne Drehbewegung der ersten Wälzkörper 1, auftretende Druckbelastung ebenso wie eine Scherbelastung, die bei Drehbewegung der ersten Wälzkörper 1 im komprimierten Zustand auftritt.

Ein weiteres Kriterium für die obere Grenze des Durchmesserunterschied Δd ist die Belastung der Auszugsführung, also z.B. das gewählte Beladungsgewicht eines Schubkastens, ab der der mindestens eine zweite, härtere Wälzkörper 2 die Belastung im Wesentlichen tragen soll. Liegt beispielsweise dieses gewählte Beladungsgewicht nahe dem Gewicht des unbeladenen Schubkastens, ist die obere Grenze des Durchmesserunterschieds Δd nahe der unteren Grenze des Durchmesserunterschieds Δd. Liegt das gewählte Beladungsgewicht des Schubkastens nahe dem Maximalgewicht des Schubkastens, ist die obere Grenze des Durchmesserunterschieds Δd entfernt von der unteren Grenze des Durchmesserunterschieds Δd zu wählen.

Durch Festlegung der unteren Grenze des Durchmesserunterschieds Δd wird sichergestellt, dass die Geräuschentwicklung beim Ausziehen des Schubkastens minimiert wird. Durch Festlegung der oberen Grenze des Durchmesserunterschieds Δd kann zum einen der Lastwechsel zwischen den ersten weicheren und zweiten härteren Wälzkörpern eingestellt werden und zum anderen eine Überlastung des ersten weicheren Wälzkörpers vermieden werden.

Für einen typischen Anwendungsfall einer Auszugsführung für Schubkästen, bei der die ersten Wälzkörper 1 aus POM und die zweiten Wälzkörper 2 aus Stahl sind und die bei einer Auszugslänge von 300 mm für eine Belastung von 45 kg (Kilogramm) ausgelegt ist, ergibt sich bei einem nominellen zweiten Durchmesser d₂ der zweiten Wälzkörper 2 von 3,9 mm für die Durchmesserdifferenz Δd folgende Bedingung: 0,02 mm < Δd < 0,17 mm. Die untere Grenze von 0,02 mm ist durch Fertigungstoleranzen und den Mindestbetrag für diese Werkstoffpaarung von POM/Stahl vorgegeben, die obere Grenze von 0,17 mm ist bedingt durch plastische Verformungen und damit Werkstoffversagen der ersten Wälzkörper 1. Dabei ist ein E-Modul von 26.000 N (Newton)/mm² für POM und ein E-Modul von 210.000 N/mm² für Stahl angenommen, wobei 16 erste Wälzkörper 1 und 8 zweite Wälzkörper 2 pro Wälzkörperkäfig 3 vorgesehen sind und die Auszugsführung einen Grundaufbau gemäß dem ersten Ausführungsbeispiel (Fig. 1 bis 3) aufweist.

Für eine Materialwahl von PP für die ersten Wälzkörper 1 mit einem E-Modul von 1.500 N/mm² ergibt sich bei ansonsten gleichen Annahmen für die Durchmesserdifferenz Δd: 0,03 mm < Δd < 0,12 mm.

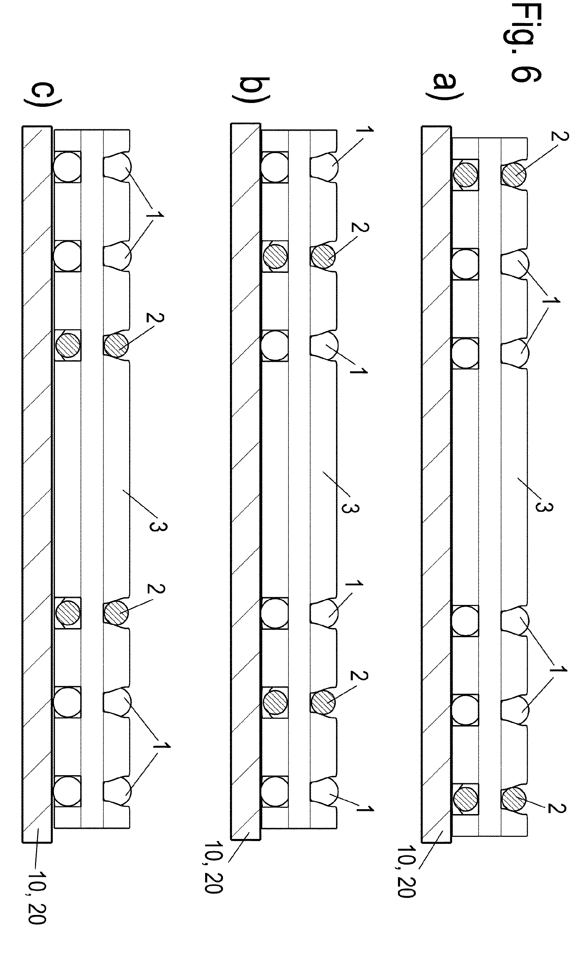

Fig. 6 zeigt in den Teilbildern b) und c) alternative Verteilungen der ersten und zweiten Wälzkörper 1, 2 innerhalb des Wälzkörperkäfigs 3. Zum Vergleich ist im Teilbild a) nochmals die bereits im ersten Ausführungsbeispiel (Fig. 1 bis 3) angegebene Konstellation wiederholt. Es wird angemerkt, dass sowohl die absolute Anzahl der ersten bzw. zweiten Wälzkörper 1, 2, als auch das Verhältnis der Anzahl der ersten bzw. zweiten Wälzkörper 1, 2 im Rahmen der Anmeldung gegenüber den hier dargestellten Ausführungsbeispielen variiert werden kann. Zudem können innerhalb einer Auszugsführung und auch innerhalb eines der Wälzkörperkäfige 3 zusätzlich auch weitere, andersartige Wälzkörper verwendet werden, die sich von den ersten und zweiten Wälzkörpern 1, 2 unterscheiden.

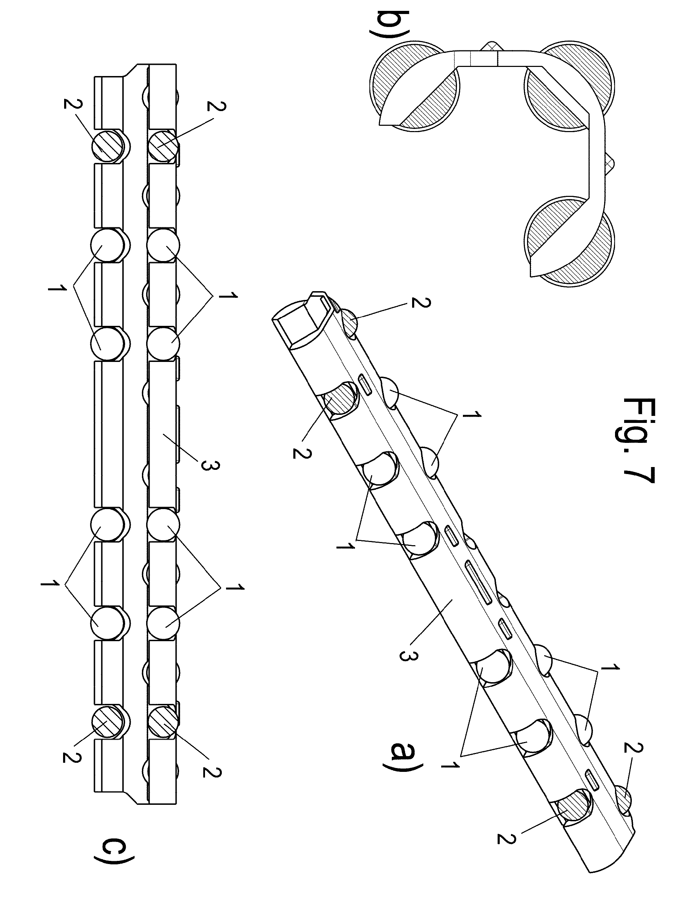

Fig. 7 zeigt einen Wälzkörperkäfig 3 für ein weiteres Ausführungsbeispiel einer Auszugsführung. Bei dem hier in perspektivischer Ansicht (Teilbild 7a), in Schnittdarstellung (Teilbild 7b) und in Seitenansicht (Teilbild 7c) dargestellten Wälzkörperkäfig 3 sind erste und zweite Wälzkörper 1, 2 in drei Reihen mit je vier ersten Wälzkörpern 1 und zwei zweiten Wälzkörpern 2 angeordnet. Vorliegend sind die Kugeln in Längsrichtung in einer der Reihen versetzt zu den anderen beiden Reihen angeordnet. Grundsätzlich kann die Lehre der Anmeldung auf eine Vielzahl von Ausgestaltungen von Wälzkörperkäfigen übertragen werden.

### Bezugszeichenliste

- 1: erster Wälzkörper
- 2: zweiter Wälzkörper
- 3: Wälzkörperkäfig
- 4: Lagerstelle für ersten Wälzkörper
- 5: Lagerstelle für zweiten Wälzkörper

- 10: äußere Auszugsschiene
- 11: Befestigungsmittel

- 20: mittlere Auszugsschiene

- 30: innere Auszugsschiene
- 31: Befestigungsmittel

- 41, 42: Belastungskurve
- 43, 44: Schalldruckpegelkurve

- d₁: nomineller Durchmesser der ersten Wälzkörper
- d₂: nomineller Durchmesser der zweiten Wälzkörper
- Δd: Durchmesserdifferenz

## Patentansprüche

1. Auszugsführung für relativ zueinander bewegbare Möbelteile, aufweisend mindestens zwei Auszugsschienen (10, 20, 30), zwischen denen mindestens ein erster Wälzkörper (1) und mindestens ein zweiter Wälzkörper (2) angeordnet sind, die in mindestens einem Wälzkörperkäfig (3) drehbar gehalten sind, wobei der mindestens eine erster Wälzkörper (1) einen größeren nominellen Durchmesser und ein kleineres E-Modul aufweist als der mindestens eine zweite Wälzkörper (2) des Wälzkörperkäfigs (3), **dadurch gekennzeichnet, dass**
ein Durchmesserunterschied (Δd) zwischen einem ersten nominellen Durchmesser (d₁) des ersten Wälzkörpers (1) und einem zweiten nominellen Durchmesser (d₂) des zweiten Wälzkörpers (2) größer ist als eine untere Grenze, die mindestens so groß ist wie eine Fertigungstoleranz (Δd₁) im Durchmesser des ersten Wälzkörpers (1), zuzüglich einer Fertigungstoleranz (Δd₂) im Durchmesser des zweiten Wälzkörpers (2) und zuzüglich eines Mindestbetrags, der mindestens 0,01 mm beträgt, und
wobei eine obere Grenze für den Durchmesserunterschied (Δd) vorgesehen ist, wobei die obere Grenze abhängig von einer Belastung der Auszugsführung ist, bei der der zumindest eine zweite Wälzkörper (2) eine Druckbelastung erfährt, und
wobei die obere Grenze maximal so groß ist wie die Summe aus der Fertigungstoleranz (Δd₁) im Durchmesser des ersten Wälzkörpers (1) und einem Maximalbetrag, der höchstens 0,3 mm beträgt.

2. Auszugsführung nach Anspruch 1, bei der der Mindestbetrag abhängig vom Unterschied des E-Moduls zwischen dem ersten und dem zweiten Wälzkörper (1, 2) ist.

3. Auszugsführung nach Anspruch 1 oder 2, bei der der Durchmesserunterschied (Δd) an der oberen Grenze kleiner ist, als dass bei Komprimierung des mindestens einen ersten Wälzkörpers (1) auf den nominellen Durchmesser (d₂) des zweiten Wälzkörpers (2) eine Fließgrenze des ersten Wälzkörpers (1) erreicht wird.

4. Auszugsführung nach einem der Ansprüche 1 bis 3, bei der die Wälzkörper (1, 2) zwischen den mindestens zwei Auszugsschienen (10, 20, 30) auf mindestens zwei Wälzkörperlaufbahnen laufen, wobei wenigstens zwei der auf einer der Wälzkörperlaufbahnen hintereinanderliegenden Wälzkörper zweite Wälzkörper (2) sind.

5. Auszugsführung nach Anspruch 4, bei der wenigstens ein erster Wälzkörper (1) auf der gleichen Wälzkörperlaufbahn der Auszugsführung angeordnet ist wie die wenigstens zwei zweiten Wälzkörper (2).

6. Auszugsführung nach Anspruch 4, bei der die wenigstens zwei zweiten Wälzkörper (2) jeweils endseitig der Wälzkörperlaufbahn angeordnet sind.

7. Auszugsführung nach einem der Ansprüche 1 bis 6, bei der neben den ersten und zweiten Wälzkörpern (1, 2) sich von den ersten und zweiten Wälzkörpern (1, 2) unterscheidende weitere Wälzkörper vorhanden sind.

8. Auszugsführung nach einem der Ansprüche 1 bis 7, bei der der mindestens eine zweite Wälzkörper (2) aus Stahl besteht.

9. Auszugsführung nach einem der Ansprüche 1 bis 8, bei der der mindestens eine erste Wälzkörper (1) aus POM oder PP besteht.

## Claims

1. A pull-out guide for furniture parts which can be moved relative to one another, having at least two pull-out rails (10, 20, 30), between which at least one first roller body (1) and at least one second roller body (2) are arranged, which are rotatably held in at least one roller body cage (3), wherein the at least one first roller body (1) has a greater nominal diameter and a lower modulus of elasticity than the at least second roller body (2) of the roller body cage (3), **characterized in that**
a difference in diameter (Δd) between a first nominal diameter (d₁) of the first roller body (1) and a second nominal diameter (d₂) of the second roller body (2) is greater than a lower limit which is at least as great as a production tolerance (Δd₁) in the diameter of the first roller body (1) plus a production tolerance (Δd₂) in the diameter of the second roller body (2), and plus a minimum amount which is at least 0.01 mm, and
wherein an upper limit is provided for the difference in diameter (Δd), the upper limit being dependent on a loading of the pull-out guide, in which the at least one second roller body (2) is subjected to a pressure load, and
wherein the upper limit is maximally as great as the sum total of the production tolerance (Δd₁) in the diameter of the first roller body (1) and a maximum amount which is at most 0.3 mm.

2. A pull-out guide according to claim 1, wherein the minimum amount is dependent on the difference of the modulus of elasticity between the first and the second roller bodies (1, 2).

3. A pull-out guide according to claim 1 or 2, wherein the difference in diameter (Δd) at the upper limit is lower than if a yield point of the first roller body (1) is reached during the compression of the at least one first roller body (1) to the nominal diameter (d₂) of the second roller body (2).

4. A pull-out guide according to one of the claims 1 to 3, wherein the roller bodies (1, 2) between the at least two pull-out rails (10, 20, 30) run on at least two roller body tracks, wherein at least two roller bodies situated behind one another on one of the roller body tracks are second roller bodies (2).

5. A pull-out guide according to claim 4, wherein the at least one first roller body (1) is arranged on the same roller body track of the pull-out guide than the at least two second roller bodies (2).

6. A pull-out guide according to claim 4, wherein the at least two second roller bodies (2) are respectively arranged at the end sides of the roller body track.

7. A pull-out guide according to one of the claims 1 to 6, wherein further roller bodies are present in addition to the first and second roller bodies (1, 2), said further roller bodies differing from the first and second roller bodies (1, 2).

8. A pull-out guide according to one of the claims 1 to 7, wherein the at least one second roller body (2) consists of steel.

9. A pull-out guide according to one of the claims 1 to 8, wherein the at least one first roller body (1) consists of POM or PP.

## Revendications

1. Guide d'extraction pour des parties de meuble mobiles l'une par rapport à l'autre, présentant au moins deux rails d'extraction (10, 20, 30) entre lesquels sont disposés au moins un premier élément de roulement (1) et au moins un deuxième élément de roulement (2) retenus avec possibilité de rotation dans au moins une cage de roulement (3), l'au moins un premier élément de roulement (1) ayant un plus grand diamètre nominal et un plus petit module d'élasticité que l'au moins un deuxième élément de roulement (2) de la cage de roulement (3), **caractérisé en ce que**
une différence de diamètre (Δd) entre un premier diamètre nominal (d₁) du premier élément de roulement (1) et un deuxième diamètre nominal (d₂) du deuxième élément de roulement (2) est plus grande qu'une limite inférieure qui est au moins égale à une tolérance de fabrication (Δd₁) du diamètre du premier élément de roulement (1), plus une différence de fabrication (Δd₂) du diamètre du deuxième élément de roulement (2) et plus une grandeur minimale qui est au minimum de 0,01 mm, et
dans lequel est prévue une limite supérieure de la différence de diamètre (Δd) qui supérieure dépend d'une mise en charge du guide d'extraction sous laquelle l'au moins un deuxième élément de roulement (2) subit une contrainte de pression, et
dans lequel la limite supérieure est au maximum égale à la somme de la tolérance de fabrication (Δd₁) du diamètre du premier élément de roulement (1) et d'une grandeur maximale qui est au maximum de 0,3 mm.

2. Guide d'extraction selon la revendication 1, dans lequel la grandeur minimale dépend de la différence de module d'élasticité entre le premier élément de roulement et le deuxième (1, 2).

3. Guide d'extraction selon la revendication 1 ou 2, dans lequel la différence de diamètre (Δd) à la limite supérieure est inférieure à la valeur à laquelle, lors de la compression de l'au moins un premier élément de roulement (1) au diamètre nominal (d₂) du deuxième élément de roulement (2), une limite de fluage du premier élément de roulement (1) est atteinte.

4. Guide d'extraction selon l'une des revendications 1 à 3, dans lequel les éléments de roulement (1, 2) circulent entre les au moins deux rails d'extraction (10, 20, 30) sur au moins deux pistes de roulement, au moins deux des éléments de roulement qui se suivent sur l'une des pistes de roulement étant des deuxièmes éléments de roulement (2).

5. Guide d'extraction selon la revendication 4, dans lequel au moins un premier élément de roulement (1) est disposé sur la même piste de roulement du guide d'extraction que les au moins deux deuxièmes éléments de roulement (2).

6. Guide d'extraction selon la revendication 4, dans lequel les au moins deux deuxièmes éléments de roulement (2) sont disposés chacun à une extrémité de la piste de roulement.

7. Guide d'extraction selon l'une des revendications 1 à 6, en ce que d'autres éléments de roulement qui se différencient des premiers et deuxièmes éléments de roulement (1, 2) sont présents à côté des premiers et deuxièmes éléments de roulement (1, 2).

8. Guide d'extraction selon l'une des revendications 1 à 7, dans lequel l'au moins un deuxième élément de roulement (2) est en acier.

9. Guide d'extraction selon l'une des revendications 1 à 8, dans lequel l'au moins un premier élément de roulement (1) est en POM ou en PP.
